# EUROPÄISCHE PATENTSCHRIFT

(11) **EP 0 653 319 B1**
(45) Veröffentlichungstag und Bekanntmachung des Hinweises auf die Patenterteilung: **07.05.1997**
(21) Anmeldenummer: 94117599.4
(22) Anmeldetag: 08.11.1994
(51) Int. Cl.: B60D 5/00, B61D 17/22

(54) **Faltenbalg als Übergangsschutz für Gelenkfahrzeuge**
Bellows as protection of the passage between articulated vehicles
Soufflet de protection du passage d'intercommunication entre véhicules articulés

(30) Priorität: 13.11.1993 DE 4338857
(43) Veröffentlichungstag der Anmeldung: 17.05.1995
(73) Patentinhaber: HÜBNER Gummi- und Kunststoff GmbH, D-34123 Kassel (DE)
(72) Erfinder: Koch, Robert, D-37242 Bad Sooden-Allendorf (DE)
(74) Vertreter: Walter, Helmut, Dipl.-Ing.

(56) Entgegenhaltungen:
- EP-A- 0 544 203
- DE-A- 3 035 159
- US-A- 1 626 048

## Beschreibung

Ein bevorzugter Einsatzzweck von entsprechend dimensionierten Faltenbälgen ist der Schutz des Übergangsbereiches zwischen zwei gelenkig miteinander gekuppelten Fahrzeugen. Dienen zwei gelenkig miteinander gekuppelte Schienen- oder Straßenfahrzeuge dem Personenverkehr, so ist es üblich, zwischen diesen Fahrzeugen eine Übergangseinrichtung vorzusehen, die den Personen ein Überwechseln vom einen zum anderen Fahrzeug gestattet. Um dieses Überwechseln von Umgebungseinflüssen unbeeinträchtigt zu ermöglichen, ist eine solche Übergangseinrichtung von einem Übergangsschutz umgeben und dieser Übergangsschutz ist häufig ein Faltenbalg, bei dem mehrere in Längsrichtung der Fahrzeuge aufeinanderfolgende gefaltete Stoffbahnen durch ihre Verbindung miteinander entlang den Längskanten eine in Umfangsrichtung geschlossene Röhre bilden, die am einen Ende mit der Stirnwand des einen, am anderen Ende mit der Stirnwand des anderen der beiden Fahrzeuge verbunden ist.

Derartige Faltenbälge sind allgemein bekannt und vielfach im Einsatz, es handelt sich um bewährte Übergangsschutzeinrichtungen, die Über eine lange Zeit hinweg zuverlässig einen Schutz von zwischen den Fahrzeugen überwechselnden Personen gewährleisten, andererseits aber die für den Fahrzeuglauf notwendigen Relativbewegungen zwischen den Fahrzeugen kaum behindern.

Bei einem solchen Faltenbalg sind Dach, Seitenwände und Boden separat hergestellte Baugruppen, die an den einander zugehörigen Kanten zu der Röhre mit rechteckigem Querschnitt zusammengefügt sind. Den Übergangsbereichen zwischen Seitenwänden und Dach bzw. Boden muß dabei unter dem Gesichtspunkt besondere Aufmerksamkeit geschenkt werden, daß sie einerseits die Balgkontur bestimmen sollen, andererseits dadurch keine unerwünschte Balgversteifung ergeben und die Beweglichkeit der Fahrzeuge relativ zueinander behindern würden. Zu diesem Gesichtspunkt tritt bei den Übergangsbereichen zwischen unteren Balgseitenwandenden und Balgboden noch das Problem der besonderen Gefährdung, sei es durch Verrotten, sei es durch Gefahr der Beschädigung durch äußere Einflüsse. Werden Seitenwände und Boden zusammengefügt, so sind die Verbindungsmittel in besonderem Maße gefährdet.

Der vorliegenden Erfindung liegt nun ein dem Oberbegriff des Anspruchs 1 entsprechender, beispielsweise aus der EP-A-0 544 203 bekannter Faltenbalg zugrunde, bei dem jede Stoffbahn sich einstückig Über den jeweiligen Übergangsbereich zwischen einer Balgseitenwand und dem Balgboden erstreckt und ihre Aufgabe ist es, einen Faltenbalg zu kennzeichnen, bei dem in jeder Balgbahn der Übergangsbereich durch eine spezielle Falttechnik so hergestellt wird, daß er den gestellten Anforderungen optimal genügt.

Die Aufgabe ist durch die Merkmale des Anspruchs 1 gelöst. Weitere vorteilhafte Merkmale eines solchen Balges ergeben sich aus den abhängigen Ansprüchen. Die Erfindung ist nachfolgend anhand der Zeichnung erläutert. In der Zeichnung zeigen:
- Fig. 1-3: drei aufeinanderfolgende Schritte bei der Herstellung einer über den Übergangsbereich zwischen einer Seitenwand und dem Balgboden durchgehenden Falte, die als eine von einer Vielzahl von Falten zu sehen ist, wie sie in der Längsrichtung der vom Faltenbalg gebildeten Röhre aufeinanderfolgen und
- Fig. 4-6: Bewegungsabläufe im Bereich eines gemäß Fig. 1-3 durch Faltenbildung hergestellten Übergangsbereichs zwischen Balgboden und einer Balgseitenwand, während
- Fig. 7: einen Faltenquerschnitt zur weiteren Erläuterung der Erfindung und
- Fig. 8: einen Stoffeckenzuschnitt zeigen.

Ausgang bei der Herstellung eines erfindungsgemäßen Faltenbalges ist für jede Falte eine zunächst ebene Materialbahn 1, die in die Form eines Spitzdaches gefaltet wird, so daß zwei äußere Materialbahnlängskanten 2,3 und eine innere Kante Beziehungsweise Firstkante 4 entstehen, wobei die beiden Faltenwände 5,6 sich unter Einschluß eines Faltenwinkels 7 von der Firstkante 4 aus zu einer der Faltenlängskanten 2 bzw., 3 erstrecken. Im Bereich der Firstkante 4 wird nun eine Naht angebracht, die aus zwei Abschnitten 8 und 9 besteht, deren einander zugekehrten Endpunkte einen vorgegebenen Abstand voneinander haben und mit A und B bezeichnet sind. Der an den Punkt A anschließende Nahtabschnitt 8 wird bei fertigem Balg in dessen Bodenbereich, der an den Punkt B anschließende Nahtabschnitt 9 wird bei fertigem Balg im Bereich einer Balgseitenwand liegen. Die Anbringung einer Naht wird in der Praxis die bevorzugte Technik sein, andere Festlegungsarten sollen dadurch jedoch nicht ausgeschlossen sein; Kleben und Heften sind Beispiele für äquivalente Techniken.

Der nächste Schritt bei der Herstellung eines erfindungsgemäßen Faltenbalges, erläutert an einer Einzelfalte, ergibt sich aus Fig. 2 als das Schwenken des an den Punkt B anschliessenden Materialbahnabschnittes mit dem Nahtabschnitt 9 in Richtung des Pfeiles 10, wobei der durch den Punkt B gekennzeichnete Stoffbahnabschnitt zungenförmig in einen taschenförmigen Abschnitt des durch den Punkt A gekennzeichneten Materialbahnabschnitts eintaucht (Pfeil 11) und ein Überlappen mit Radius entsteht.

Auf jede der äußeren Materialbahnlängskanten 2,3 wird nun ein Klemmrahmen 12 bzw. 13 aufgesteckt, der gleichzeitig der Verbindung der nicht dargestellten aber entsprechenden nächstfolgenden Materialbahn mit der dargestellten Materialbahn dient.

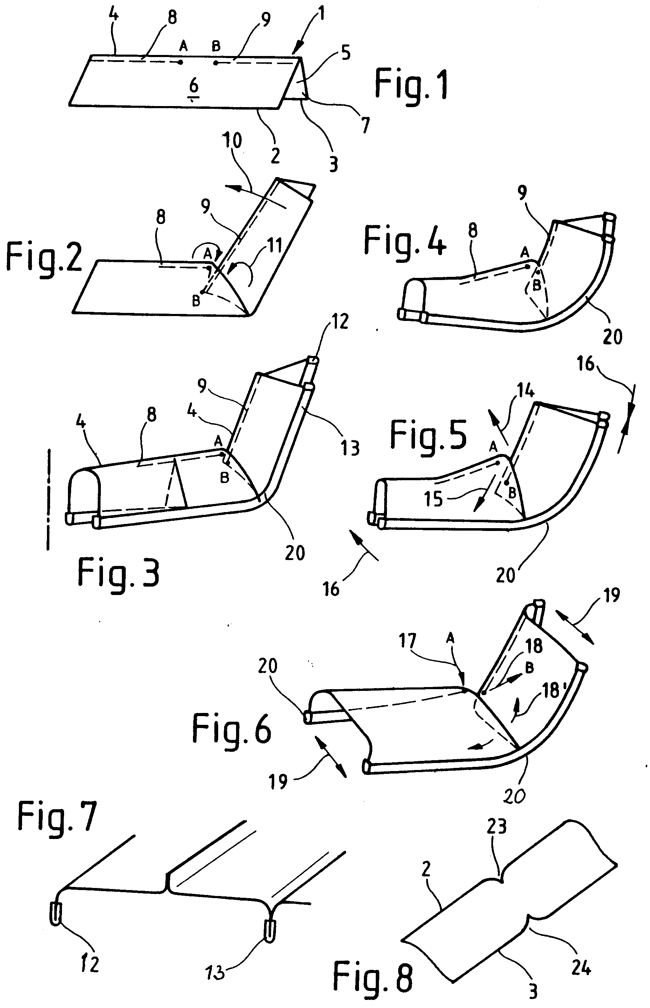

Der Nahtabschnitt 8 ist relativ kurz und lediglich in diesem Bereich hat der nun einen Balgbodenabschnitt bildende Abschnitt der Materialbahn Spitzdachform, anschließend wird sich die Materialbahn gemäß Fig. 3 in den Querschnitt einer etwa halbkreisförmigen, nach außen offenen Rinne einstellen, die an beiden Längsrändern von einem Rahmen 12 bzw. 13 gefaßt ist.

Der Nahtabschnitt 9 ist demgegenüber so lang wie der an den Punkt B anschließende Materialbahnabschnitt, so daß der an den Punkt B anschließende Materialbahnabschnitt eine nach außen offene Rinne mit Dreieckquerschnitt zwischen den Rahmen 12,13 auf seiner gesamten Länge hat.

Ersichtlich geht innen der Balgboden winklig in die Balgseitenwand über, während dieser Übergang außen bogenförmig ist.

Der Faltenaufbau ist demzufolge dadurch gekennzeichnet, daß beim Einlegen der Falte die Nähte und Überlappungen so gelegt werden, daß die Übergänge zwischen Falten und Überlappungen relativ zueinander abrollen, wenn die Falten bei Rotationsbewegung um die Hochachse auseinandergezogen bzw. zusammengedrückt werden (Fig. 1 bis 3 für Bewegungsablauf bei der Fertigung). Dabei sind die Abstände zwischen Faltennähten und Überlappung so festgelegt, daß der Auszug der Seitenfalte und der Bodenfalte identisch sind. Dies bedeutet Maximalauszug.

Der Bewegungsablauf im Faltenbalg bei entsprechenden Fahrzeugbewegungen wird nun anhand Fig. 4-6 wiederum beispielhaft an einer Falte des aus einer Vielzahl solcher Falten bestehenden Faltenbalges erläutert.

Bei der Geradeausfahrt des Gelenkfahrzeuges, das vorzugsweise ein Gelenkomnibus für den Straßen-, d.h. gleislosen Verkehr sein soll, ohne daß dies jedoch erfindungsgemäße Voraussetzung wäre, haben die Falten die Form der Fig. 4, die die in Fig. 3 dargestellte Form ist.

Durchfährt ein Fahrzeug eine Kurve, so ergibt sich für den kurveninneren Übergangsbereich zwischen Boden und kurveninnerer Seitenwand die Situation gemäß Fig. 5. Der Punkt A bewegt sich nach oben (Pfeil 14) und entsprechend bewegt sich der Punkt B nach unten (Pfeil 15), er bewegt sich außerdem in die im Balgboden gebildete Tasche hinein, die Überlappung "rollt ein". Die beiden Rahmen 12,13 werden in gleicher Weise einander angenähert (Doppelpfeilungen 16).

Gleichzeitig ergibt sich für den kurvenäußeren Übergangsbereich zwischen Boden und kurvenäußerer Seitenwand die Situation gemäß Fig. 6. Der Punkt A bewegt sich nach unten (Pfeil 17), während sich der Punkt B nach oben und außen bewegt (Pfeile 18, 18'). Die Überlappung "rollt auf". Die beiden Rahmen 12,13 entfernen sich voneinander (Doppelpfeilungen 19).

Die Faltung der Eckenbereiche ist so gestaltet, daß der Stoff, d.h. die Materialbahn, in der Seite (freier Stoff) vollständig, d.h. zu 100 % für den Auszug genutzt werden kann, wie es sich aus Fig. 7 ergibt.

Der Radius 20 im Bereich des Überganges der Rahmen 12,13 zwischen Balgbodenbereich 21 und Balgseitenwandbereich 22 wird durch die Ausbildung des Eckenzuschnitts gemäß Fig. 8 begünstigt. In dem Bereich zwischen den Punkten A und B weist die Stoff- bzw. Materialbahn von den Seitenkanten 2,3 aus symmetrisch taillenförmige Einschnitte 23,24 auf.

Wie bereits erwähnt, ist eine Vielzahl von Materialbahnen wie dargestellt und beschrieben im Rahmen 12,13 zu einer Röhre mit Rechteckquerschnitt zusammengefügt und die Endrahmen an beiden Faltenbalgenden sind so ausgebildet, daß jedes der beiden Enden an einem der beiden gelenkig miteinander verbundenen Fahrzeugen befestig werden kann.

## Patentansprüche

1. Faltenbalg als Übergangsschutz zwischen zwei gelenkig miteinander verbundenen Fahrzeugen, wobei in der Längsrichtung des einen in Umfangsrichtung geschlossenen Tunnel bildenden Faltenbalges mehrere Falten aufeinanderfolgen, die beiden äußeren Faltenkanten (2,3) jeweils einer Falte in einem Rahmen (12,13) gefaßt sind und die von den äußeren Faltenkanten (2,3) schräg nach innen verlaufenden Faltenwände (5,6) in einer inneren Kante (4), die die Scheitellinie eines Bogens sein kann, zusammenlaufen, **dadurch gekennzeichnet**, daß in jedem Übergangsbereich zwischen einer der Balgseitenwände und dem Balgboden der Bereich der inneren Kante (4) durch eine fixierende Naht (8,9) gekennzeichnet ist, daß diese Naht aus zwei, in Nahtlängsrichtung voneinander beabstandeten Nahtabschnitten (8 und 9) besteht und daß der Übergang zwischen Balgboden und jeweiliger Balgseitenwand durch das Schwenken des Balgmateriales aus zunächst einer Ebene in zwei zueinander senkrechte Ebenen entstanden ist, wobei der Bereich zwischen den Nahtabschnitten den Schwenkbereich bildet, so daß der Anfang (A) des einen Nahtabschnitts (8) den Boden, der diesem Nahtabschnitt zugekehrte Anfang (B) des anderen Nahtabschnitts (9) die Seitenwand definiert und der dem Balgboden nächste Seitenwandteil zungenförmig in eine von dem der Balgseitenwand nächsten Bodenteil gebildete Tasche eintaucht.

2. Faltenbalg nach Anspruch 1, **gekennzeichnet** durch einen Abstand zwischen den Nahtabschnitten (8,9) und ein Maß des zungenförmigen Eintauchens der Balgseitenwand in die Tasche des Balgbodens derart, daß der Auszug von Seitenwandfalte und Bodenfalte identisch sind.

3. Faltenbalg nach Anspruch 1 oder 2, **dadurch gekennzeichnet**, daß bei Verstellung der beiden Balgseitenwände relativ zueinander um die Faltenbalghochachse und damit verbundenem Ausziehen der Falten der einen Balgseitenwand (Vergrößerung des Winkels zwischen den Faltenwänden) und Zusammenlegen der Falten der anderen Balgseitenwand (Verkleinerung des Winkels zwischen den Faltenwänden) die zungenförmigen Seitenwandteile in den taschenförmigen Bodenteilen abrollen.

4. Faltenbalg nach einem der Ansprüche 1 bis 3, **dadurch gekennzeichnet**, daß die Materialbahn vor dem Schwenken in zwei zueinander senkrechte Ebenen und im glatten Zustand (Winkel zwischen den Faltenwänden beträgt 180°) symmetrisch zwischen den Nahtabschnitten von beiden Faltenseitenkanten her taillenförmig eingeschnitten ist.

5. Faltenbalg nach einem der Ansprüche 1 bis 4, **dadurch gekennzeichnet**, daß jeweils zwei benachbarte Balgseitenwandkanten zweier aufeinanderfolgender Falten in einem gemeinsamen Rahmen (12,13) gehalten sind.

## Claims

1. A communication bellows to protect the transition between two pivotally interconnected vehicles, a plurality of folds being disposed consecutively in the longitudinal direction of the bellows, which forms a peripherally closed tunnel, the two outer edges (2, 3) of each fold being mounted in a frame (12, 13) and the fold walls (5, 6), which extend inwardly at an angle from the outer edges (2, 3) of the folds, meeting at an inner edge (4), which may be the apical line of an arch, characterised in that the region of the inner edge (4) in each transition zone between one of the bellows side walls and the bellows base is characterised by a fixing seam (8, 9), in that this seam consists of two portions (8 and 9) spaced apart in the longitudinal direction of the seam, and in that the transition between the bellows base and each bellows side wall is formed by swinging the bellows material out of initially one plane into two planes at right angles to one another, the region between the seam portions forming the swing zone so that the start (A) of one seam portion (8) defines the base and the start (B) of the other seam portion (9) facing the first seam portion defines the side wall and the side wall part nearest the bellows base penetrates in the form of a tongue into a pocket formed by the base part nearest the bellows side wall.

2. A communication bellows according to claim 1, chracterised by a distance between the seam portions (8, 9) and a dimension of the tongue-like penetration of the bellows side wall into the pocket of the bellows base such that the expansion of the side wall fold and the expansion of the base fold are identical.

3. A communication bellows according to claim 1 or 2, characterised in that on movement of the two bellows side walls relatively to one another about the bellows vertical axis and accompanying expansion of the folds of one bellows side wall (enlargement of the angle between the fold walls) and the contraction of the folds of the other bellows side wall (reduction of the angle between the fold walls) the tongue-like side wall parts roll in the pocket-shaped base parts.

4. A communication bellows according to any one of claims 1 to 3, characterised in that before being swung into two planes at right angles to one another and in the flat state (angle between the fold walls is 180°) the material web is cut symmetrically between the seam portions from both fold side edges so as to be waisted.

5. A communication bellows according to any one of claims 1 to 4, characterised in that each two adjacent bellows side wall edges of two consecutive folds are mounted in a common frame (12, 13).

## Revendications

1. Soufflet de protection de passage entre deux véhicules liés ensemble de manière à former un véhicule articulé, selon lequel plusieurs plis se succèdent dans le sens de la longueur du soufflet formant un tunnel dont la circonférence est fermée, selon lequel les deux bords extérieurs (2, 3) de chaque pli sont pris dans un cadre (12, 13) et les pans de pli (5, 6) extérieurs, s'étendant obliquement vers l'intérieur depuis les bords extérieurs (2, 3) de pli, se rejoignent en une arête intérieure (4) qui peut être la ligne de sommets d'un arc, **caractérisé en ce que**, dans chaque zone de transition entre une des parois latérales du soufflet et le sol du soufflet, la zone de l'arête intérieure (4) est caractérisée par une couture (8, 9) servant à la fixation, en ce que cette couture est constituée de deux tronçons de couture (8 et 9) qui sont à une certaine distance l'un de l'autre dans le sens de la longueur de la couture, et en ce que la transition entre le sol du soufflet et la paroi latérale considérée du soufflet est formée en faisant pivoter le matériau du soufflet de manière à le sortir d'abord d'un plan et à le placer ensuite dans deux plans perpendiculaires l'un à l'autre, la zone entre les tronçons de couture formant la zone de pivotement de telle sorte que le début (A) d'un tronçon de couture (8) définit le sol et que le début (B), proche de ce tronçon de couture, de l'autre tronçon de couture (9), définit la paroi latérale, et la partie de paroi latérale la plus proche du sol du soufflet pénètre, en forme de languette, dans une poche formée par la partie de sol la plus proche de la paroi latérale du soufflet.

2. Soufflet selon la revendication 1, **caractérisé par** une distance entre les tronçons de couture (8, 9) et une mesure de la pénétration en languette de la paroi latérale du soufflet dans la poche du sol du soufflet telles que l'écartement du pli de paroi latérale et celui du pli de sol sont identiques.

3. Soufflet selon la revendication 1 ou 2, **caractérisé en ce que**, lors du déplacement des deux parois latérales de soufflet l'une par rapport à l'autre autour de l'axe normal du soufflet et donc lors de l'écartement consécutif des plis d'une paroi latérale du soufflet (augmentation de l'angle entre les pans de pli) et lors de la compression des plis de l'autre paroi latérale du soufflet (diminution de l'angle entre les pans de pli), les parties de paroi latérale en forme de languettes roulent dans les parties de sol en forme de poches.

4. Soufflet selon l'une des revendications 1 à 3, **caractérisé en ce que** la bande de matériau, avant le pivotement dans deux plans perpendiculaires l'un à l'autre et à l'état lisse (angle entre les pans de pli égal à 180°), est fendue symétriquement en forme d'entailles entre les tronçons de couture à partir des bords latéraux de pli.

5. Soufflet selon l'une des revendications 1 à 4, **caractérisé en ce que**, à chaque fois, deux bords adjacents de paroi latérale de soufflet de deux plis qui se suivent sont tenus dans un cadre (12, 13) commun.
